# EUROPEAN PATENT APPLICATION

(11) **EP 4 701 275 A1**
(43) Date of publication of application: **25.02.2026**
(21) Application number: 24813750.7
(22) Date of filing: 20.02.2024
(51) Int. Cl.: H04W 48/16, H04W 48/10

(54) **NTN ACCESS METHOD AND COMMUNICATION APPARATUS**

(30) Priority: 31.05.2023 CN 202310645328
(71) Applicant: Huawei Technologies Co., Ltd., Shenzhen, Guangdong 518129 (CN)
(72) Inventor: KONG, Chuili, Shenzhen, Guangdong 518129 (CN); LUO, Hejia, Shenzhen, Guangdong 518129 (CN); XU, Chenlei, Shenzhen, Guangdong 518129 (CN); MENG, Xian, Shenzhen, Guangdong 518129 (CN); WANG, Jun, Shenzhen, Guangdong 518129 (CN)
(74) Representative: Isarpatent
(86) International application number: PCT/CN2024/077695
(87) International publication number: WO 2024/244544

(57) **Abstract**

Embodiments of this application provide a non-terrestrial network NTN access method and a communication apparatus. The method includes: A terminal device receives at least one first broadcast signal based on a first periodicity or continuously receives the at least one first broadcast signal, to obtain a target first broadcast signal, where the first periodicity is less than a minimum sending periodicity of a second broadcast signal; receives at least one second broadcast signal based on the target first broadcast signal, to obtain a target second broadcast signal; and performs access based on the target second broadcast signal. When a sending periodicity of the first broadcast signal is reduced, efficiency of traversing all receive beam directions by the UE is higher, so that a strongest receive beam direction can be determined more quickly, to improve satellite access efficiency.

## Description

This application claims priority to Chinese Patent Application No. 2023106453288, filed with the China National Intellectual Property Administration on May 31, 2023 and entitled "NTN ACCESS METHOD AND COMMUNICATION APPARATUS", which is incorporated herein by reference in its entirety.

### TECHNICAL FIELD

Embodiments of this application relate to satellite networks, and more specifically, to an NTN access method and a communication apparatus.

### BACKGROUND

A non-terrestrial network (non-terrestrial network, NTN) such as satellite communication has significant advantages such as global coverage, long-distance transmission, flexible networking, convenient deployment, and no limitation from geographical conditions, and has been widely applied to a plurality of fields such as maritime communication, positioning and navigation, disaster relief, a scientific experiment, video broadcasting, and earth observation.

A current new radio (new radio, NR) beam sweeping solution is not applicable to an NTN system. In an NR system, a sweeping periodicity of a synchronization signal and PBCH block (synchronization signal and PBCH block, SSB) is 20 ms by default, where a terminal device (user equipment, UE) is polled at an interval of 20 ms. After the UE completes sweeping in all directions, the UE finally aligns with a satellite. In this case, time needed for searching for a single frequency is 2614*20 ms=52.28s, and a delay is long. If it is considered that the UE needs to sweep a plurality of pieces of frequency information, a time length for the UE to capture the satellite is proportional to a quantity of to-be-swept frequencies. For UE at an edge beam position, because the UE takes long time to capture a satellite, in a process of performing beam alignment on the satellite at a moment, the satellite may have flown away and cannot cover the UE. Consequently, the UE needs to perform frequency sweeping and beam sweeping again to capture a next possible satellite. In other words, for the NTN system, as a quantity of beams for the UE increases, it is increasingly difficult for the UE to capture and access a satellite.

### SUMMARY

Embodiments of this application provide an NTN access method and a communication apparatus, so that UE can quickly capture and access a satellite.

According to a first aspect, an NTN access method is provided. The method may be performed by UE, or may be performed by a component (for example, a chip or a circuit) disposed in the UE. This is not limited.

The method may include: receiving at least one first broadcast signal based on a first periodicity or continuously receiving the at least one first broadcast signal, to obtain a target first broadcast signal, where the first periodicity is less than a minimum sending periodicity of a second broadcast signal; receiving at least one second broadcast signal based on the target first broadcast signal, to obtain a target second broadcast signal; and performing access based on the target second broadcast signal.

In this technical solution, before receiving the second broadcast signal (where for example, the second broadcast signal may be an existing broadcast signal, for example, an NR broadcast signal), the UE may first receive the first broadcast signal, to obtain the target first broadcast signal, receive the second broadcast signal based on the target first broadcast signal, to obtain the target second broadcast signal, and access a satellite based on the target second broadcast signal. It may be understood that, in this application, the UE traverses all receive beam directions to receive the first broadcast signal. When a sending periodicity of the first broadcast signal is reduced, efficiency of traversing all receive beam directions by the UE is higher, so that a strongest receive beam direction can be determined more quickly, to improve satellite access efficiency.

With reference to the first aspect, in some implementations of the first aspect, a beam width of the at least one first broadcast signal is greater than or equal to a beam width of the at least one second broadcast signal.

In the foregoing solution, the first broadcast signal may be a monophonic signal or a narrowband signal. Therefore, power aggregation may be performed in a narrower bandwidth with a higher link budget.

With reference to the first aspect, in some implementations of the first aspect, there is no intersection of a spectrum set to which the at least one first broadcast signal belongs and a spectrum set to which the at least one second broadcast signal belongs.

In the foregoing solution, a center frequency of any first broadcast signal is different from a center frequency of any second broadcast signal, and occupied spectra do not overlap. In other words, there is a frequency offset between a center frequency of the at least one first broadcast signal and a center frequency of the at least one second broadcast signal. In other words, frequencies in the spectrum set to which the at least one first broadcast signal belongs do not overlap frequencies in the spectrum set to which the at least one second broadcast signal belongs.

With reference to the first aspect, in some implementations of the first aspect, a frequency raster of the at least one first broadcast signal is sparser than a frequency raster of the at least one second broadcast signal.

In the foregoing solution, frequency resources are reduced in frequency domain, and this helps the UE accelerate searching for a broadcast signal, to further improve access efficiency.

With reference to the first aspect, in some implementations of the first aspect, a first beam direction is determined based on a receive beam direction of the at least one first broadcast signal, where the first beam direction is a beam direction of receiving the target first broadcast signal.

In the foregoing solution, the UE continuously switches a receive beam direction of the UE, receives the at least one first broadcast signal, and determines the first beam direction from the at least one first broadcast signal, where the first beam direction is a beam direction of the target first broadcast signal.

With reference to the first aspect, in some implementations of the first aspect, the at least one first broadcast signal is received based on a first beam direction set, to obtain a plurality of first received signal sets, where the first beam direction set is a receive beam direction set of the UE; and the first beam direction is determined based on the plurality of first received signal sets.

In the foregoing solution, the UE traverses receive beam directions of the UE, receives a plurality of first broadcast signals, to obtain received signal sets for the plurality of first broadcast signals, and determines the first beam direction from the plurality of received signal sets.

With reference to the first aspect, in some implementations of the first aspect, the first beam direction is determined from the plurality of first received signal sets based on reference signal received power (reference signal received power, RSRP), a signal-to-noise ratio (signal-to-noise ratio, SNR or S/N) criterion, or a reference signal received quality (reference signal received quality, RSRQ).

In the foregoing solution, the UE may select the first beam direction based on the reference signal received power RSRP, the signal-to-noise ratio SNR criterion, or the reference signal received quality RSRQ. It should be understood that the UE may select the first beam direction based on one or more of the reference signal received power RSRP, the signal-to-noise ratio SNR criterion, or the reference signal received quality RSRQ, or may select, based on a first threshold, a beam direction corresponding to a signal that satisfies a requirement of the first threshold as the first beam direction.

With reference to the first aspect, in some implementations of the first aspect, the first beam direction is a receive beam direction corresponding to a received signal with highest RSRP in the plurality of first received signal sets; or the first beam direction is a receive beam direction corresponding to a received signal with a highest SNR in the plurality of first received signal sets; or the first beam direction is a receive beam direction corresponding to a received signal with highest RSRQ in the plurality of first received signal sets.

In the foregoing solution, the UE determines the first beam direction based on any one of the reference signal received power RSRP, the signal-to-noise ratio SNR criterion, or the reference signal received quality RSRQ, or may determine the first beam direction with reference to a plurality of parameters of the reference signal received power RSRP, the signal-to-noise ratio SNR criterion, the reference signal received quality RSRQ, and another parameter.

With reference to the first aspect, in some implementations of the first aspect, the at least one second broadcast signal is received based on a second beam direction set, where the second beam direction set includes only the first beam direction, or the second beam direction set includes a beam direction determined based on the first beam direction.

In the foregoing solution, the UE receives the second broadcast signal based on the first beam direction, or may determine a plurality of beam directions based on the first beam direction to receive the second broadcast signal.

With reference to the first aspect, in some implementations of the first aspect, a second broadcast signal set is determined, where the second broadcast signal set includes a plurality of second broadcast signals to which the target first broadcast signal is mapped; and a target second broadcast signal set is swept based on the second beam direction set, to obtain the target second broadcast signal, where a beam direction corresponding to the target second broadcast signal is a second beam direction, and the second beam direction is a beam direction in the second beam direction set.

In the foregoing solution, the UE determines, based on a mapping relationship between the first broadcast signal and the second broadcast signal, the second broadcast signal set corresponding to the target first broadcast signal, so that the target second broadcast signal can be quickly found, to improve satellite access efficiency.

With reference to the first aspect, in some implementations of the first aspect, the second broadcast signal set is determined based on a first mapping relationship, where the first mapping relationship is a mapping relationship between the target first broadcast signal and the plurality of second broadcast signals; or the second broadcast signal set is obtained from the target first broadcast signal.

In the foregoing solution, the mapping relationship between the first broadcast signal and the second broadcast signal may be predefined or preconfigured, or may be carried in the target first broadcast signal. This is not limited in embodiments of this application.

With reference to the first aspect, in some implementations of the first aspect, the second broadcast signal set is determined based on first indication information carried in the target first broadcast signal; or a first sequence corresponding to the target first broadcast signal is determined, and the second broadcast signal set is determined based on a correspondence between the first sequence and the second broadcast signal set.

In the foregoing solution, the target first broadcast signal may carry indication information to indicate the corresponding second broadcast signal set, or the first sequence corresponding to the target first broadcast signal may be determined, and the second broadcast signal set is determined based on the correspondence between the first sequence and a second broadcast signal set.

With reference to the first aspect, in some implementations of the first aspect, when the UE is UE that does not initially access a network, the method further includes: receiving a first threshold, where the first threshold indicates an ephemeris validity duration in an ephemeris validity duration set of a first satellite and a second satellite, the first satellite is a serving satellite of the UE, and the second satellite is a neighboring satellite; and when a difference between a power-on moment of the UE and a power-off moment of the UE is less than or equal to the first threshold, searching for, by the UE, the first broadcast signal of the first satellite and the first broadcast signal of the second satellite based on a third beam direction set, first frequency information of the first satellite, and first frequency information of the second satellite, where the third beam direction set is determined based on the second beam direction, ephemeris information of the first satellite, and ephemeris information of the second satellite, and the first frequency information is frequency information that corresponds to the first broadcast signal and that is stored by the UE; and searching, by the UE, for the second broadcast signal of the first satellite and the second broadcast signal of the second satellite based on the third beam direction set, second frequency information of the first satellite, and second frequency information of the second satellite, where the second frequency information is frequency information that corresponds to the second broadcast signal and that is stored by the UE.

In the foregoing solution, the UE that does not perform initial access may adjust a satellite searching behavior based on the stored frequency information of the first broadcast signal, the stored frequency information of the second broadcast signal, and the first threshold delivered by the satellite, to ensure that the UE can determine a search range by using valid satellite ephemeris information, and ensure that the UE efficiently captures a satellite.

With reference to the first aspect, in some implementations of the first aspect, the first frequency information, the second frequency information, the first threshold, satellite ephemeris information in the entire network, and a maximum sweeping angle of a broadcast beam are received by using a broadcast message or radio resource control signaling.

In the foregoing solution, an access network device may send information such as the first frequency information, the second frequency information, the satellite ephemeris information in the entire network, and the maximum sweeping angle of the broadcast beam by using the broadcast message or the radio resource control RRC signaling. Correspondingly, the UE may receive the information such as the first frequency information, the second frequency information, the satellite ephemeris information in the entire network, and the maximum sweeping angle of the broadcast beam by using the broadcast message or the radio resource control RRC signaling.

With reference to the first aspect, in some implementations of the first aspect, the first broadcast signal is a monophonic signal or a narrowband signal.

With reference to the first aspect, in some implementations of the first aspect, if a frequency of the second broadcast signal is f=a+b, a frequency of the first broadcast signal can be f=a*n_first+b+fre_offset, where n_first represents a multiple of sparseness, fre_offset represents a frequency offset X MHz, and a and b represent frequency values.

According to a second aspect, an NTN access method is provided. The method may be performed by an access network device, or may be performed by a component (for example, a chip or a circuit) disposed in the access network device. This is not limited.

The method may include: sending at least one first broadcast signal based on a first periodicity or continuously sending the at least one first broadcast signal, where the at least one first broadcast signal is used by a terminal device UE to determine a target first broadcast signal, the target first broadcast signal is used by the UE to receive at least one second broadcast signal, and the first periodicity is less than a minimum sending periodicity of the second broadcast signal; and sending at least one second broadcast signal, where the at least one second broadcast signal is used by the UE to determine a target second broadcast signal, and the target second broadcast signal is used by the UE to access a first satellite.

In this technical solution, the access network device may send the first broadcast signal and the second broadcast signal, so that the UE receives the second broadcast signal based on the target first broadcast signal after obtaining the target first broadcast signal, to obtain the target second broadcast signal, and accesses a satellite based on the target second broadcast signal. It may be understood that, in this application, the UE traverses all receive beam directions to receive the first broadcast signal sent by the access network device. When a sending periodicity of the first broadcast signal is reduced, efficiency of traversing all receive beam directions by the UE is higher, so that a strongest receive beam direction can be determined more quickly, to improve satellite access efficiency.

With reference to the second aspect, in some implementations of the second aspect, a beam width of the at least one first broadcast signal is greater than or equal to a beam width of the at least one second broadcast signal.

With reference to the second aspect, in some implementations of the second aspect, there is no intersection of a spectrum set to which the at least one first broadcast signal belongs and a spectrum set to which the at least one second broadcast signal belongs.

With reference to the second aspect, in some implementations of the second aspect, a frequency raster of the at least one first broadcast signal is sparser than a frequency raster of the at least one second broadcast signal.

With reference to the second aspect, in some implementations of the second aspect, when the UE is UE that does not initially access a network, the method further includes: sending a first threshold, where the first threshold indicates an ephemeris validity duration in an ephemeris validity duration set of the first satellite and a second satellite, the first satellite is a serving satellite of the UE, and the second satellite is a neighboring satellite.

With reference to the second aspect, in some implementations of the second aspect, first frequency information, second frequency information, the first threshold, satellite ephemeris information in the entire network, and a maximum sweeping angle of a broadcast beam are sent by using a broadcast message or radio resource control signaling, where the first frequency information is frequency information that corresponds to the first broadcast signal and that is stored by the UE, and the second frequency information is frequency information that corresponds to the second broadcast signal and that is stored by the UE.

With reference to the second aspect, in some implementations of the second aspect, the first broadcast signal is a monophonic signal or a narrowband signal.

With reference to the second aspect, in some implementations of the second aspect, if a frequency of the second broadcast signal is f=a+b, a frequency of the first broadcast signal can be f=a*n_first+b+fre_offset, where n_first represents a multiple of sparseness, fre_offset represents a frequency offset X MHz, and a and b represent frequency values.

With reference to the second aspect, in some implementations of the second aspect, for a frequency band of 0 MHz to 3000 MHz, a center frequency of the first broadcast signal is f=M*50+n_first*N*1200 kHz+fre_offset, where a set of M is {1, 3, 5}, a value range of N includes an integer from 1 to 2499, and M and N are symbols that indicate variable ranges; for a frequency band of 3000 MHz to 24250 MHz, a center frequency of the first broadcast signal is f=3000 MHz+n_first*N* 1.44 MHz+fre_offset, where a value range of N includes an integer from 0 to 14756; and for a frequency band of 24250 MHz to 100000 MHz, a center frequency of the first broadcast signal is f=24250.08 MHz+n_first*N*17.28 MHz+fre_offset, where a value range of N includes an integer from 0 to 4383.

According to a third aspect, a communication apparatus is provided. The apparatus may be UE, or may be a chip or a circuit disposed in the UE. This is not limited in this application.

The apparatus includes: a transceiver unit, configured to receive at least one first broadcast signal based on a first periodicity or continuously receive the at least one first broadcast signal, to obtain a target first broadcast signal, where the first periodicity is less than a minimum sending periodicity of a second broadcast signal; and the transceiver unit is further configured to receive at least one second broadcast signal based on the target first broadcast signal, to obtain a target second broadcast signal; and a processing unit, configured to perform access based on the target second broadcast signal.

In this technical solution, before receiving an existing broadcast signal (the second broadcast signal), the UE may first receive the first broadcast signal, to obtain the target first broadcast signal; receive the second broadcast signal based on the target first broadcast signal, to obtain the target second broadcast signal; and access a satellite based on the target second broadcast signal. It may be understood that, in this application, the UE traverses all receive beam directions to receive the first broadcast signal. When a sending periodicity of the first broadcast signal is reduced, efficiency of traversing all receive beam directions by the UE is higher, so that a strongest receive beam direction can be determined more quickly, to improve satellite access efficiency.

With reference to the third aspect, in some implementations of the third aspect, a beam width of the at least one first broadcast signal is greater than or equal to a beam width of the at least one second broadcast signal.

With reference to the third aspect, in some implementations of the third aspect, there is no intersection of a spectrum set to which the at least one first broadcast signal belongs and a spectrum set to which the at least one second broadcast signal belongs.

With reference to the third aspect, in some implementations of the third aspect, a frequency raster of the at least one first broadcast signal is sparser than a frequency raster of the at least one second broadcast signal.

With reference to the third aspect, in some implementations of the third aspect, the processing unit is further configured to determine a first beam direction based on a receive beam direction of the at least one first broadcast signal, where the first beam direction is a beam direction of receiving the target first broadcast signal.

With reference to the third aspect, in some implementations of the third aspect, the transceiver unit is further configured to receive the at least one first broadcast signal based on a first beam direction set, to obtain a plurality of first received signal sets, where the first beam direction set is a receive beam direction set of the UE; and the processing unit is further configured to determine the first beam direction based on the plurality of first received signal sets.

With reference to the third aspect, in some implementations of the third aspect, the processing unit is specifically configured to determine the first beam direction from the plurality of first received signal sets based on reference signal received power RSRP, a signal-to-noise ratio SNR criterion, or reference signal received quality RSRQ.

With reference to the third aspect, in some implementations of the third aspect, the first beam direction is a receive beam direction corresponding to a received signal with highest RSRP in the plurality of first received signal sets; or the first beam direction is a receive beam direction corresponding to a received signal with a highest SNR in the plurality of first received signal sets; or the first beam direction is a receive beam direction corresponding to a received signal with highest RSRQ in the plurality of first received signal sets.

With reference to the third aspect, in some implementations of the third aspect, the transceiver unit is specifically configured to receive the at least one second broadcast signal based on a second beam direction set, where the second beam direction set includes only the first beam direction, or the second beam direction set includes a beam direction determined based on the first beam direction.

With reference to the third aspect, in some implementations of the third aspect, the processing unit is further configured to determine a second broadcast signal set, where the second broadcast signal set includes a plurality of second broadcast signals to which the target first broadcast signal is mapped; and the processing unit is further configured to sweep a target second broadcast signal set based on the second beam direction set, to obtain the target second broadcast signal, where a beam direction corresponding to the target second broadcast signal is a second beam direction, and the second beam direction is a beam direction in the second beam direction set.

With reference to the third aspect, in some implementations of the third aspect, the processing unit is further configured to: determine the second broadcast signal set based on a first mapping relationship, where the first mapping relationship is a mapping relationship between the target first broadcast signal and the plurality of second broadcast signals; or obtain the second broadcast signal set from the target first broadcast signal.

With reference to the third aspect, in some implementations of the third aspect, the processing unit is further configured to determine the second broadcast signal set based on first indication information carried in the target first broadcast signal; or the processing unit is further configured to: determine a first sequence corresponding to the target first broadcast signal; and determine the second broadcast signal set based on a correspondence between the first sequence and the second broadcast signal set.

With reference to the third aspect, in some implementations of the third aspect, when the UE is UE that does not initially access a network, the transceiver unit is further configured to: receive a first threshold, where the first threshold indicates an ephemeris validity duration in an ephemeris validity duration set of a first satellite and a second satellite, the first satellite is a serving satellite of the UE, and the second satellite is a neighboring satellite; and when a difference between a power-on moment of the UE and a power-off moment of the UE is less than or equal to the first threshold, the processing unit is configured to search for the first broadcast signal of the first satellite and the first broadcast signal of the second satellite based on a third beam direction set, first frequency information of the first satellite, and first frequency information of the second satellite, where the third beam direction set is determined based on the second beam direction, ephemeris information of the first satellite, and ephemeris information of the second satellite, and the first frequency information is frequency information that corresponds to the first broadcast signal and that is stored by the UE; and the processing unit is configured to search for the second broadcast signal of the first satellite and the second broadcast signal of the second satellite based on the third beam direction set, second frequency information of the first satellite, and second frequency information of the second satellite, where the second frequency information is frequency information that corresponds to the second broadcast signal and that is stored by the UE.

With reference to the third aspect, in some implementations of the third aspect, the transceiver unit is further configured to receive the first frequency information, the second frequency information, the first threshold, satellite ephemeris information in the entire network, and a maximum sweeping angle of a broadcast beam by using a broadcast message or radio resource control signaling.

With reference to the third aspect, in some implementations of the third aspect, the first broadcast signal is a monophonic signal or a narrowband signal.

With reference to the third aspect, in some implementations of the third aspect, if a frequency of the second broadcast signal is f=a+b, a frequency of the first broadcast signal can be f=a*n_first+b+fre_offset, where n_first represents a multiple of sparseness, fre_offset represents a frequency offset X MHz, and a and b represent frequency values.

According to a fourth aspect, a communication apparatus is provided. The apparatus may be an access network device, or may be a component (for example, a chip or a circuit) disposed in the access network device. This is not limited.

The apparatus may include: a transceiver unit, configured to send at least one first broadcast signal based on a first periodicity or continuously sending the at least one first broadcast signal, where the at least one first broadcast signal is used by a terminal device UE to determine a target first broadcast signal, the target first broadcast signal is used by the UE to receive at least one second broadcast signal, and the first periodicity is less than a minimum sending periodicity of the second broadcast signal; and the transceiver unit is further configured to send the at least one second broadcast signal, where the at least one second broadcast signal is used by the UE to determine a target second broadcast signal, and the target second broadcast signal is used by the UE to access a first satellite.

In this technical solution, the access network device may send the first broadcast signal and the second broadcast signal, so that the UE receives the second broadcast signal based on the target first broadcast signal after obtaining the target first broadcast signal, to obtain the target second broadcast signal, and accesses a satellite based on the target second broadcast signal. It may be understood that, in this application, the UE traverses all receive beam directions to receive the first broadcast signal sent by the access network device. When a sending periodicity of the first broadcast signal is reduced, efficiency of traversing all receive beam directions by the UE is higher, so that a strongest receive beam direction can be determined more quickly, to improve satellite access efficiency.

With reference to the fourth aspect, in some implementations of the fourth aspect, a beam width of the at least one first broadcast signal is greater than or equal to a beam width of the at least one second broadcast signal.

With reference to the fourth aspect, in some implementations of the fourth aspect, there is no intersection of a spectrum set to which the at least one first broadcast signal belongs and a spectrum set to which the at least one second broadcast signal belongs.

With reference to the fourth aspect, in some implementations of the fourth aspect, a frequency raster of the at least one first broadcast signal is sparser than a frequency raster of the at least one second broadcast signal.

With reference to the fourth aspect, in some implementations of the fourth aspect, when the UE is UE that does not initially access a network, the transceiver unit is further configured to send a first threshold, where the first threshold indicates an ephemeris validity duration in an ephemeris validity duration set of the first satellite and a second satellite, the first satellite is a serving satellite of the UE, and the second satellite is a neighboring satellite.

With reference to the fourth aspect, in some implementations of the fourth aspect, the transceiver unit is further configured to send first frequency information, second frequency information, the first threshold, satellite ephemeris information in the entire network, and a maximum sweeping angle of a broadcast beam by using a broadcast message or radio resource control signaling, where the first frequency information is frequency information that corresponds to the first broadcast signal and that is stored by the UE, and the second frequency information is frequency information that corresponds to the second broadcast signal and that is stored by the UE.

With reference to the fourth aspect, in some implementations of the fourth aspect, the first broadcast signal is a monophonic signal or a narrowband signal.

With reference to the fourth aspect, in some implementations of the fourth aspect, if a frequency of the second broadcast signal is f=a+b, a frequency of the first broadcast signal can be f=a*n_first+b+fre_offset, where n_first represents a multiple of sparseness, fre_offset represents a frequency offset X MHz, and a and b represent frequency values.

With reference to the fourth aspect, in some implementations of the fourth aspect, for a frequency band of 0 MHz to 3000 MHz, a center frequency of the first broadcast signal is f=M*50+n_first*N*1200 kHz+fre_offset, where a set of M is { 1, 3, 5}, a value range of N includes an integer from 1 to 2499, and M and N are symbols that indicate variable ranges; for a frequency band of 3000 MHz to 24250 MHz, a center frequency of the first broadcast signal is f=3000 MHz+n_first*N* 1.44 MHz+fre_offset, where a value range of N includes an integer from 0 to 14756; and for a frequency band of 24250 MHz to 100000 MHz, a center frequency of the first broadcast signal is f=24250.08 MHz+n_first*N* 17.28 MHz+fre_offset, where a value range of N includes an integer from 0 to 4383.

According to a fifth aspect, a communication apparatus is provided. The apparatus is configured to perform the method according to the first aspect and the second aspect. Specifically, the apparatus may include a unit and/or a module, for example, a processing unit and/or a communication unit, configured to perform the method according to any one of the possible implementations of the first aspect and the second aspect.

In an implementation, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in UE or an access network device. When the apparatus is the chip, the chip system, or the circuit used in the UE or the access network device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a sixth aspect, a communication apparatus is provided. The apparatus includes at least one processor. The at least one processor is coupled to at least one memory. The at least one memory is configured to store a computer program or instructions. The at least one processor is configured to invoke the computer program or the instructions from the at least one memory and run the computer program or the instructions, to enable the communication apparatus to perform the method according to any one of the implementations of the first aspect and the second aspect.

In an implementation, the apparatus is a satellite.

In another implementation, the apparatus is a chip, a chip system, or a circuit used in a satellite.

According to a seventh aspect, this application provides a processor configured to perform the methods according to the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable storage medium stores program code executed by a device. The program code includes the method according to any one of the implementations of the first aspect and the second aspect.

According to a ninth aspect, a computer program product including instructions is provided. When the computer program product runs on a computer, the computer is enabled to perform the method according to any one of the implementations of the first aspect and the second aspect.

According to a tenth aspect, a chip is provided. The chip includes a processor and a communication interface. The processor reads, through the communication interface, instructions stored in a memory, to perform the method according to any one of the implementations of the first aspect and the second aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method according to any one of the implementations of the first aspect and the second aspect.

For beneficial effects of the second aspect to the tenth aspect, refer to the beneficial effects of the first aspect. Details are not described herein again.

### BRIEF DESCRIPTION OF DRAWINGS

FIG. 1 is a diagram of a multi-beam mobile satellite communication system to which an embodiment of this application is applicable;
FIG. 2 is a diagram of a network architecture to which an embodiment of this application is applicable;
FIG. 3 is a diagram of an NTN access method to which an embodiment of this application is applicable;
FIG. 4 is a diagram of a time domain feature of continuously sending a first broadcast signal to which an embodiment of this application is applicable;
FIG. 5 is a diagram of a time domain feature of sending a first broadcast signal based on a first periodicity to which an embodiment of this application is applicable;
FIG. 6 is a diagram of a space domain feature of a first broadcast signal to which an embodiment of this application is applicable;
FIG. 7 is a frequency distribution diagram of a first broadcast signal and a second broadcast signal in a frequency band of 3000 MHz to 24250 MHz to which an embodiment of this application is applicable;
FIG. 8 is a frequency distribution diagram of a first broadcast signal and a second broadcast signal in a frequency band of 24250 MHz to 100000 MHz to which an embodiment of this application is applicable;
FIG. 9 is a diagram of a beam used by UE to receive a second broadcast signal to which an embodiment of this application is applicable;
FIG. 10 is a diagram of a mapping relationship between a first broadcast signal and second broadcast signals to which an embodiment of this application is applicable;
FIG. 11 is a schematic interaction flowchart of accessing a satellite by UE to which an embodiment of this application is applicable;
FIG. 12 is a block diagram of a communication apparatus 1200 according to this application; and
FIG. 13 is a diagram of a structure of a communication apparatus 1300 according to this application.

### DESCRIPTION OF EMBODIMENTS

The following describes technical solutions of this application with reference to accompanying drawings.

The technical solutions of this application may be applied to a non-terrestrial network (non-terrestrial network, NTN) system such as a satellite communication system or a high altitude platform station (high altitude platform station, HAPS) communication system, for example, an integrated communication and navigation (integrated communication and navigation, ICaN) system or a global navigation satellite system (global navigation satellite system, GNSS).

The satellite communication system may be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), a future mobile communication system, and the like.

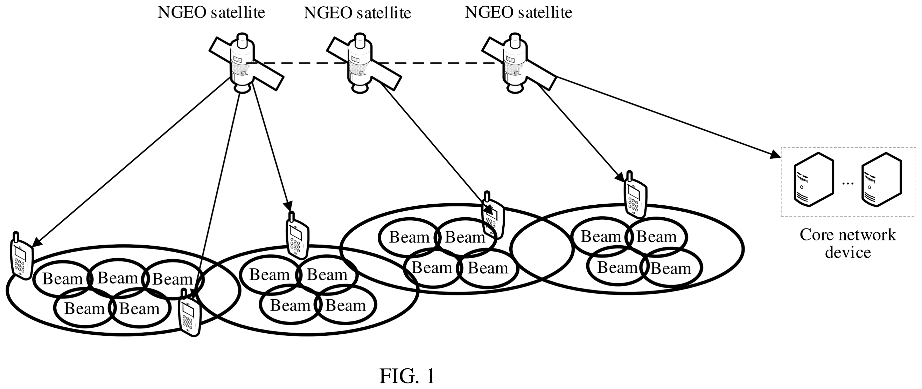

FIG. 1 is a diagram of a multi-beam mobile satellite communication system to which an embodiment of this application is applicable. As shown in FIG. 1, a satellite provides a communication service for a terminal device by using a plurality of beams. The satellite in this scenario is a non-geostationary orbit (non-geostationary earth orbit, NGEO) satellite, and the satellite is connected to a core network device. The satellite uses the plurality of beams to cover a service area, and different beams may be used to perform communication in one or more manners of time division, frequency division, and space division. The satellite provides communication and navigation services for the terminal device by broadcasting a communication signal and a navigation signal. The satellite mentioned in this embodiment of this application may alternatively be a satellite base station or a network-side device mounted on a satellite.

The terminal device mentioned in this embodiment of this application includes various handheld devices, vehicle-mounted devices, wearable devices, or computing devices that have a wireless communication function, or other processing devices connected to a wireless modem, and may be specifically user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a satellite phone, a cellular phone, a smartphone, a wireless data card, a wireless modem, a machine-type communication device, a cordless phone, a session initiation protocol (session initiation protocol, SIP) phone, a wireless local loop (wireless local loop, WLL) station, a personal digital processing (personal digital assistant, PDA), a handheld device or a computing device having a wireless communication function or another processing device connected to a wireless modem, a vehicle-mounted device or a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network or a future communication network, or the like.

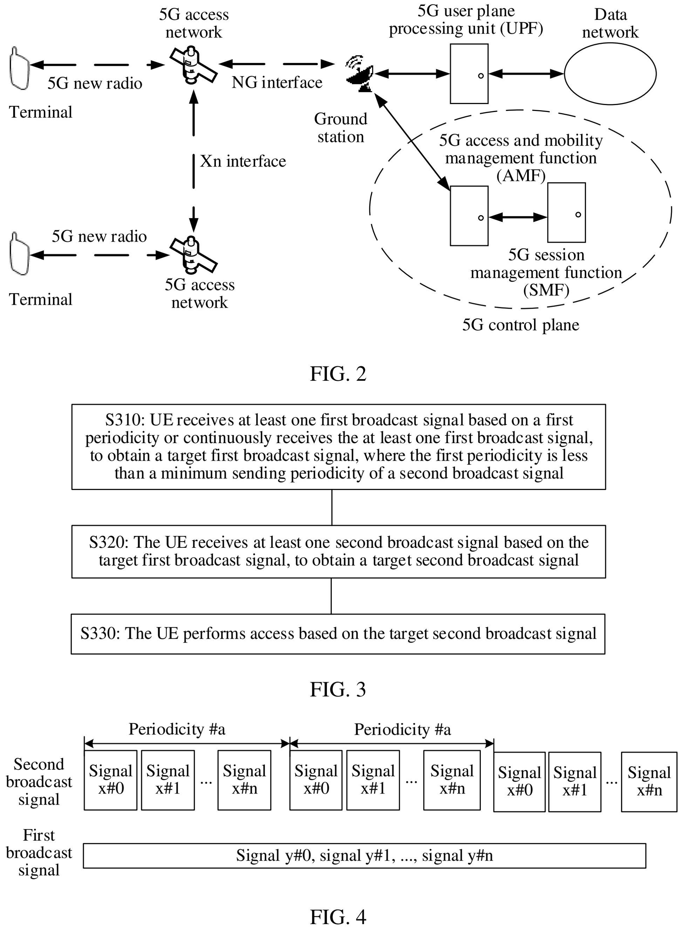

FIG. 2 is a diagram of a network architecture to which an embodiment of this application is applicable. A terrestrial mobile terminal UE accesses a network through 5G new radio. A 5G access network device is deployed on a satellite, and is connected to a terrestrial core network through a radio link. In addition, there is a radio link between satellites, to implement signaling exchange and user data transmission between access network devices. Network elements and interfaces of the network elements in FIG. 2 are described as follows:

Terminal device: The terminal device is a mobile device that supports 5G new radio, for example, a mobile device such as a mobile phone and a pad. The terminal device may access a satellite network through an air interface and initiate a service such as a call or network access.

5G access network device: The 5G access network device mainly provides a radio access service, schedules a radio resource for an access terminal, provides a reliable wireless transmission protocol and data encryption protocol, and the like, and is, for example, a base station.

5G core network: The 5G core network provides services such as user access control, mobility management, session management, user security authentication, and charging. The 5G core network includes a plurality of functional units, and may be divided into a control plane functional entity and a data plane functional entity. An access and mobility management unit (access and mobility management function, AMF) is responsible for user access management, security authentication, and mobility management. A user plane function (user plane function, UPF) is responsible for managing functions such as user plane data transmission and traffic statistics collection.

Ground station: The ground station is responsible for forwarding signaling and service data between a satellite access network device and the 5G core network.

5G new radio: The 5G new radio is a radio link between the terminal and the access network device.

Xn interface: The Xn interface is an interface between the 5G access network device and the access network device, and is mainly for signaling exchange such as handover.

NG interface: The NG interface is an interface between the 5G access network device and the 5G core network, and is mainly for exchanging signaling such as NAS signaling of the core network and service data of a user.

Terms used in this application are first briefly described, to help understand embodiments of this application.

1. SSB: The SSB includes a primary synchronization signal (primary synchronization signal, PSS), a secondary synchronization signal (secondary synchronization signal, SSS), and a physical broadcast channel (physical broadcast channel, PBCH), and provides, for UE, downlink synchronization of a cell and basic configuration information of the cell. The PBCH carries a master information block (master information block, MIB) of the cell, and the MIB indicates whether a system information block type 1 (system information block type 1, SIB1) exists. The SSB appears regularly in frequency domain, that is, the SSB may appear at a specific interval. After the UE is powered on, the UE may search for a cell at the interval.

2. NR beam sweeping: A frequency in NR is higher, and a transmission loss of a high-frequency carrier is large. Therefore, beamforming needs to be performed to increase a transmission distance of a radio signal. Because a coverage angle of each beam is limited, sweeping is performed by using a plurality of beams in the NR to cover a service range of an entire cell. Beam sweeping means that physical channels or reference signals are sent by using beams in different directions at different moments. A plurality of SSBs usually need to be sent in one cell to complete one beam sweeping. A maximum of 64 beams in directions may be configured for the SSB.

In a frequency sweeping mechanism in the NR, frequencies are searched based on a synchronization raster Synchronization Raster, and a center frequency of an SSB is searched for from a low frequency to a high frequency. Once a frequency is found and synchronized, the searching is not continued. Instead, a cell is camped on, and a subsequent procedure proceeds. UE searches for only a frequency band supported by the UE. For example, if a mobile phone supports only three frequencies n3, n5, and n28 in sub-2G, the mobile phone searches for GSCNs of only the three frequency bands. This accelerates cell searching. A position of a center frequency of an SSB in an NR system is obtained based on a parameter of a global synchronization raster channel (global synchronization channel number, GSCN) of the NR system provided in Table 1 below.

**Table 1**

| Frequency range (MHz) | SS block frequency position SS_{REF} | GSCN | Range of GSCN |
|---|---|---|---|
| 0 to 3000 | N*1200 kHz+M*50 kHz, N=1:2499, and M∈{ 1, 3, 5 } | 3N+(M-3)/2 | 2 to 7498 |
| 3000 to 24250 | 3000 MHz+N*1.44 MHz, and N=0:14756 | 7499+N | 7499 to 22255 |
| 24250 to 100000 | 24250.08 MHz+N*17.28 MHz, and N=0:4383 | 22256+N | 22256 to 26639 |

When a 5G mobile phone finds a frequency based on a GSCN, the UE needs to search for two radio frames in time domain (20 ms, referring to section 4.1 in 38.213). The UE performs, by using three PSS sequences, related detection on received signals on a corresponding frequency. After detecting a corresponding PSS, the UE further performs SSS synchronization. If the three PSS sequences are not detected, the UE proceeds to a next frequency. Therefore, final frequency sweeping time is 20 ms*Quantity of GSCNs in a worst case.

Based on the mechanism in the NR, the following solutions are provided to resolve a problem of long access time of a very small aperture (very small aperture terminal, VSAT) UE.

Technical path 1: Narrow beam for a satellite and wide beam for UE.

Beam broadening is performed on a UE side, and receiving and sending are performed by using wide beams, to reduce a quantity of beams and accelerate sweeping. In this mode, a standard is not changed. Currently, an NR protocol supports this mode, namely, a P1 process (coarse alignment).

Technical path 2: Wide beam for a satellite and narrow beam for UE.

A beam on a satellite side is broadened. The UE uses narrow beams to reduce a quantity of beams on the satellite side and accelerate sweeping. In this mode, a standard is not changed either.

The following table may be obtained by referring to related documents.

**Table 2**

| Parameter | Unit | Technical path 1 (narrow beam for a satellite and wide beam for UE) | Technical path 2 (wide beam for a satellite and narrow beam for UE) |
|---|---|---|---|
| Maximum EIRP density | dBW/Hz | -51.1 | -51.1 |
| Maximum EIRP | dBW | 32.7 (calculated based on 240 MHz) | 32.7 (calculated based on 240 MHz) |
| Element antenna gain | dBi | 3.63 | 3.63 |
| Antenna gain | dBi | 29.25 (edge) | 8.42 (edge) |
| Satellite transmit power | dBW | -1.3 | -1.3 |
| Antenna array | Pieces | 33*33 | 3*3 |
| Satellite beam width | Degree | 3.34 (subsatellite point) | 33.84 (subsatellite point) |
| Quantity of satellite beams | Pieces | 2232 | 7 |
| Bandwidth of a broadcast beam | MHz | 57.6 | 57.6 |
| Carrier frequency | GHz | 11.7 | 11.7 |
| Orbital altitude | km | 550 | 550 |
| Communication distance | km | 1123 | 1123 |
| User elevation angle (minimum) | deg | 25 | 25 |
| Element antenna gain | dBi | 3.1 | 3.1 |
| Noise coefficient | dB | 1.9 | 1.9 |
| Antenna temperature | K | 180 | 180 |
| VSAT terminal G/T (element antenna 3.1 dB) | dB/K | -12.66 | 7.9 |
| VSAT terminal receive array | Pieces | 3*3 | 32*32 |
| VSAT terminal receive beam width | Degree | 33.84 | 3.2 |
| Quantity of UE beams | Pieces | 7 | 2614 |
| VSAT terminal CNR | db | -8.54 | -8.8 |

EIRP represents equivalent isotropic radiated power (equivalent isotropic radiated power, EIRP), and CNR represents carrier-to-noise ratio (carrier-to-noise ratio, CNR).

It can be learned from the foregoing table that, in the technical path 1, the beams on the UE side are properly broadened, the quantity of beams on the UE side is changed from original 2614 narrow beams to seven wide beams, and a link budget is -8.54 dB, which basically satisfies an SSB decoding requirement; and in the technical path 2, the beams on the satellite side are properly broadened, the quantity of beams on the satellite side is changed from original 2232 narrow beams to seven wide beams, and a link budget is -8.8 dB, which basically satisfies an SSB decoding requirement. More specifically, the technical path 2 may be implemented in the following two manners.

Manner 1: The satellite sweeps seven beam positions by using a broadcast beam. A default SSB interval is 20 ms. To be specific, in one SSB burst sweeping periodicity, the seven beam positions are swept only once.

Manner 2: In an implementation, repeated placement is performed nine-times for 64 SSB indexes. To be specific, in one SSB burst periodicity, all seven beam positions are swept nine times, and finally 63 SSBs are arranged.

Sweeping time for the technical path 1, sweeping time for Manner 1 in the technical path 2, and sweeping time for Manner 2 in the technical path 2 are calculated below, and payload capabilities are analyzed, to summarize advantages and disadvantages of the three solutions, as shown in Table 3 below.

**Table 3**

| Parameter | Unit | Technical path 1 (narrow beam for a satellite and wide beam for UE) | Technical path 2 (wide beam for a satellite and narrow beam for UE)-Manner 1 | Technical path 2 (wide beam for a satellite and narrow beam for UE)-Manner 2 |
|---|---|---|---|---|
| Antenna array | Pieces | 33*33 | 3*3 | 3*3 |
| Satellite beam width | Degree | 3.34 (subsatellite point) | 33.84 (subsatellite point) | 33.84 (subsatellite point) |
| Quantity of satellite beams | Pieces | 2232 | 7 | 7 |
| VSAT terminal receive array | Pieces | 3*3 | 32*32 | 32*32 |
| VSAT terminal receive beam width | Degree | 33.84 | 3.2 | 3.2 |
| Quantity of UE beams | Pieces | 7 | 2614 | 2614 |
| VSAT terminal CNR | db | -8.54 | -8.8 | -8.8 |
| SSB sweeping interval | ms | 20 | 20 | 20 |
| Times of sweeping performed by UE in a single SSB burst | Pieces | 1 | 1 | 7 |
| Total sweeping time of a single frequency | ms | 140 | 52280 | 7469 |
| Quantity of broadcast beams simultaneously emitted by a satellite payload | Pieces | 35 | 1 | 1 |
| Advantage | N/A | The standard is not changed | The standard is not changed | The standard is not changed |
| Disadvantage | N/A | Cannot be implemented by the satellite payload in a short time period | Long beam alignment time | Long beam alignment time and large quantity of SSB resources occupied |

It can be learned from the foregoing table that, in the technical path 1, the quantity of broadcast beams that need to be simultaneously emitted by the satellite payload is 35, and this basically cannot be implemented by the payload in a short time period. This is mainly because the quantity of beams that are simultaneously emitted is closely related to factors such as payload power, payload volume, and payload components. Consequently, increasing the quantity of beams is a great challenge. In an example, a quantity of beams that can be simultaneously emitted by a payload of a commercial system starlink is 8 to 16. Manner 1 in the technical path 2 and Manner 2 in the technical path 2 have a low requirement on payload capabilities, but total sweeping time of a single frequency is 52.28s and 7.649s respectively, and the time is still long. As a result, in a beam sweeping process of the UE, a satellite has flown away, and the UE cannot connect to the satellite. In addition, because a manner of sweeping a same beam position a plurality of times in one SSB periodicity is used in Manner 2 in the technical path 2, more time-frequency resources need to be occupied compared with those in Manner 1 in the technical path 2.

Based on the foregoing analysis, it can be learned that neither the technical path 1 nor the technical path 2 can satisfy a requirement. Therefore, a broadcast mechanism needs to be studied, so that the UE quickly captures a satellite and completes subsequent access.

In view of this, this application provides an NTN access method, so that UE can capture and access a satellite more quickly.

The following describes the technical solutions in this application.

FIG. 3 is a diagram of an NTN access method provided in this application.

S310: UE receives at least one first broadcast signal based on a first periodicity or continuously receives the at least one first broadcast signal, to obtain a target first broadcast signal, where the first periodicity is less than a minimum sending periodicity of a second broadcast signal.

First, a feature of the first broadcast signal provided in embodiments of this application is described.

In this application, an access network device sends the at least one first broadcast signal, and correspondingly, the UE receives the at least one first broadcast signal.

The first broadcast signal is more densely arranged in time domain than the second broadcast signal.

In this application, the second broadcast signal may be an NR broadcast signal, or may be a broadcast signal in another system such as LTE or WiMAX. This is not limited in embodiments of this application.

In a possible implementation, the access network device continuously sends the first broadcast signal, and correspondingly, the UE continuously receives the first broadcast signal.

It should be understood that, in a state in which the UE continuously receives the first broadcast signal, the UE may continuously monitor the first broadcast signal, but may not receive all first broadcast signals.

FIG. 4 is a diagram of a time domain feature of continuously sending a first broadcast signal. As shown in FIG. 4, a signal #x is used as an example of the second broadcast signal, and the signal is sent in time domain based on a periodicity #a; and a signal #y is used as an example of the first broadcast signal, and the signal is continuously sent in time domain.

In another possible implementation, the access network device sends the first broadcast signal based on the first periodicity, and correspondingly, the UE receives the first broadcast signal based on the first periodicity.

The first periodicity is less than the minimum sending periodicity of the second broadcast signal.

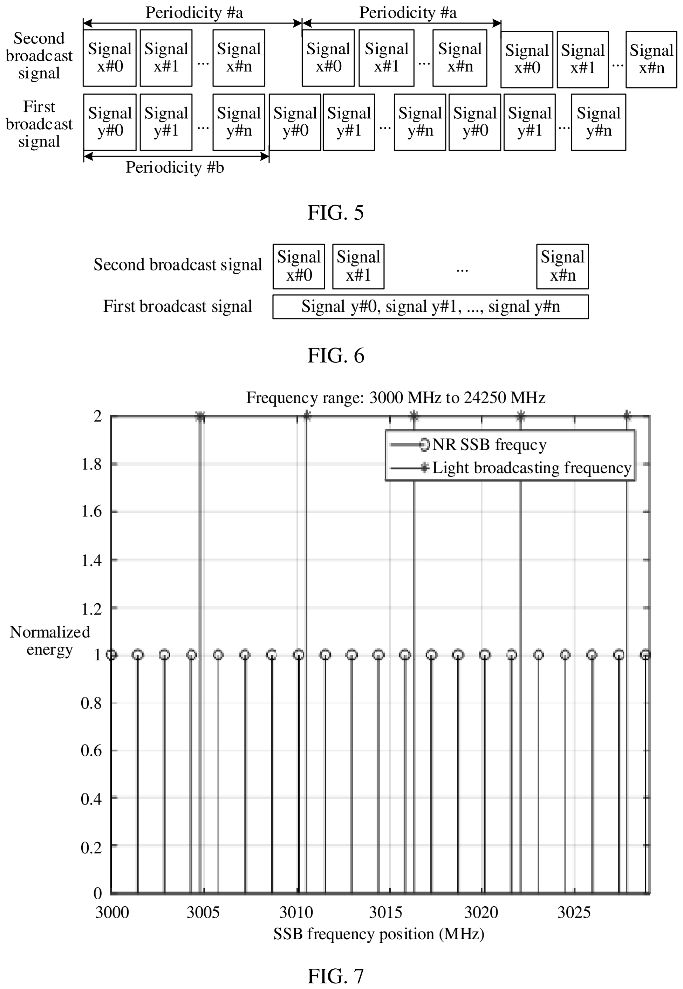

FIG. 5 is a diagram of a time domain feature of sending a first broadcast signal based on a first periodicity. As shown in FIG. 5, a signal #x is used as an example of the second broadcast signal, and the signal is sent in time domain based on a periodicity #a; and a signal #y is used as an example of the first broadcast signal, and the signal is sent in time domain based on a periodicity #b (an example of the first periodicity).

In this application, a frequency of the second broadcast signal may be a frequency of an SSB signal in NR, LTE, or the like. This is not limited in embodiments of this application.

For example, when the second broadcast signal is an SSB signal, that is, the signal #x is an SSB signal, and 5 ms is used as an example of a minimum sending periodicity of the SSB signal, a sending periodicity of the signal #y is less than 5 ms.

In this application, the UE traverses all receive beam directions to receive a broadcast signal. When a sending periodicity of the broadcast signal is reduced, efficiency of traversing all receive beam directions by the UE is higher, so that a strongest receive beam direction can be determined more quickly, to accelerate satellite access.

Optionally, there is no intersection of a spectrum set to which the at least one first broadcast signal belongs and a spectrum set to which the at least one second broadcast signal belongs.

In an optional understanding, there is a frequency offset between a center frequency of the at least one first broadcast signal and a center frequency of the at least one second broadcast signal. In other words, frequencies in the spectrum set to which the at least one first broadcast signal belongs do not overlap frequencies in the spectrum set to which the at least one second broadcast signal belongs. In other words, a center frequency of any first broadcast signal is different from a center frequency of any second broadcast signal, and occupied spectra do not overlap.

Optionally, a frequency raster of the at least one first broadcast signal is sparser than a frequency raster of the at least one second broadcast signal.

It should be understood that a frequency raster of a broadcast signal may be used for describing frequency distribution of the broadcast signal. For example, for a frequency difference between two adjacent center frequencies, refer to a concept of a synchronization raster in NR. For 0 MHz to 3000 MHz, the frequency raster is 1200 kHz; for 3000 MHz to 24250 MHz, the frequency raster is 1.44 MHz; and for 24250 MHz to 100000 MHz, the frequency raster is 17.28 MHz.

For example, if the frequency of the second broadcast signal is f=a+b, a frequency of the first broadcast signal can be f=a*n_first+b+fre_offset, where n_first represents a multiple of sparseness of the frequency raster, fre_offset represents a frequency offset X MHz, and a and b represent frequency values.

In this application, frequency resources are reduced in frequency domain, and this helps the UE accelerate searching for a broadcast signal, to further improve access efficiency.

Optionally, a beam width of the at least one first broadcast signal is greater than or equal to a beam width of the at least one second broadcast signal.

FIG. 6 is a diagram of a space domain feature of a first broadcast signal. As shown in FIG. 6, for example, a signal #x is used as an example of the second broadcast signal, and a signal #y is used as an example of the first broadcast signal. A beam width of the signal #x is greater than a beam width of the signal #y.

In this application, the first broadcast signal may be a monophonic signal or a narrowband signal. Therefore, power aggregation may be performed in a narrower bandwidth with a higher link budget.

For example, if a bandwidth of the first broadcast signal is 1/127 of a bandwidth of the second broadcast signal, a link budget of the first broadcast signal is 21 dB greater than a link budget of the second broadcast signal. Therefore, a wider beam may be used for sending the first broadcast signal.

The following describes designs of the first broadcast signal in different frequency bands by using examples.

A center frequency of an NR system is used as an example. Center frequencies of the first broadcast signal in different frequency bands have different positions. Therefore, for each frequency band, a frequency of the first broadcast signal is as follows:

For a frequency band of 0 MHz to 3000 MHz, a=N*1200 kHz, b=M*50 kHz, and a center frequency of the first broadcast signal is f=M*50 kHz+n_first*N*1200 kHz+fre_offset, where a set of M is {1, 3, 5}, a value range of N includes an integer from 1 to 2499, and M and N are symbols indicating a variable range; and a frequency of the second broadcast signal in NR is f=M*50+N*1200 kHz, and a set of M is {1, 3, 5}.

For a frequency band of 3000 MHz to 24250 MHz, a=N*1.44 MHz, b=3000 MHz, and a center frequency of the first broadcast signal is f=3000 MHz+n_first*N*1.44 MHz+fre_offset, where a value range of N includes an integer from 0 to 14756.

FIG. 7 is a frequency distribution diagram of a first broadcast signal and a second broadcast signal in a frequency band of 3000 MHz to 24250 MHz. For example, n_first=4 and fre_offset=4.7952 MHz.

For a frequency band of 24250 MHz to 100000 MHz, a center frequency of the first broadcast signal is f=24250.08 MHz+n_first*N*17.28 MHz+fre_offset, where a value range of N includes an integer from 0 to 4383.

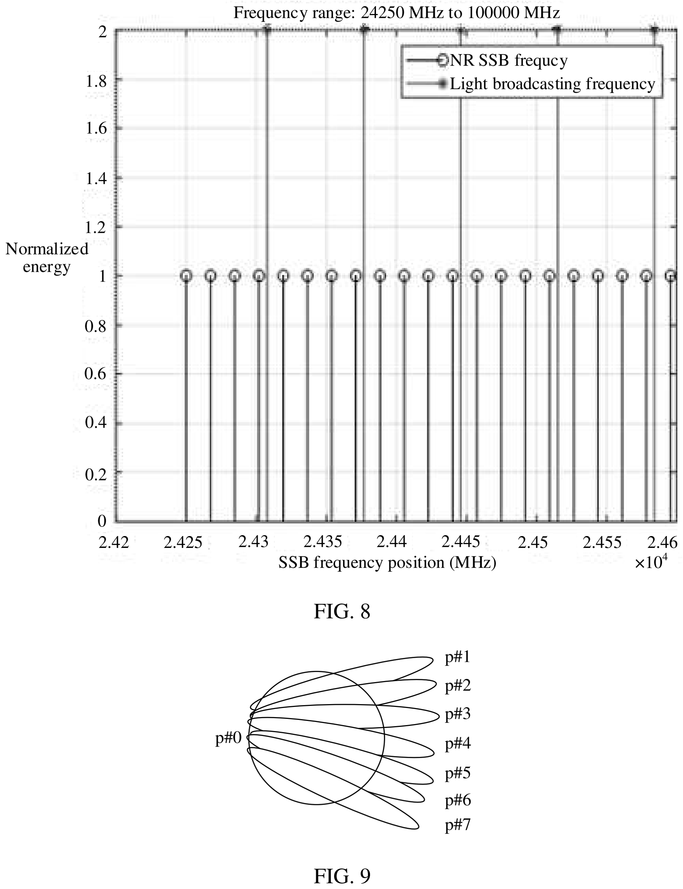

FIG. 8 is a frequency distribution diagram of a first broadcast signal and a second broadcast signal in a frequency band of 24250 MHz to 100000 MHz. For example, n_first=4 and fre_offset=57.6 MHz.

The following describes a method for determining a target first broadcast signal by the UE.

The UE receives one or more first broadcast signals, and determines the target first broadcast signal based on the one or more first broadcast signals.

In a possible implementation, the UE determines a first beam direction based on a receive beam direction of the one or more first broadcast signals. The first beam direction is a beam direction of receiving the target first broadcast signal. In other words, a first broadcast signal corresponding to the first beam direction is the target first broadcast signal.

It should be understood that the first beam direction is a receive beam direction with highest received broadcast signal strength.

It should be understood that, when receiving the one or more first broadcast signals, the UE continuously switches the receive beam direction, traverses all receive beam directions, and selects a beam direction with a strongest received first broadcast signal, that is, the first beam direction.

A manner in which the UE determines the first beam direction is not limited in embodiments of this application. The following is merely an example for description.

In a possible implementation, the UE receives the at least one first broadcast signal based on a first beam direction set, to obtain a plurality of first received signal sets, and determines the first beam direction based on the plurality of first received signal sets.

The first beam direction set is a receive beam direction set of the UE.

Specifically, the UE switches the receive beam direction, receives same first broadcast signals by using a plurality of different receive beam directions, traverses all receive beam directions in the receive first beam direction set, to obtain the plurality of first received signal sets for the plurality of first broadcast signals, and selects the first beam direction from the plurality of first received signal sets.

The following describes an example of switching the receive beam direction by the UE.

When receiving the first broadcast signal, the UE may determine a plurality of time slices in a time division manner based on a second periodicity, and may perform beam direction adjustment once in each time slice.

The second periodicity may be a predefined or preconfigured periodicity. This is not limited in embodiments of this application.

The following describes an example manner of determining the first beam direction based on the plurality of first received signal sets.

In a possible implementation, the UE determines the first beam direction based on a first condition.

For example, the first condition may be at least one of reference signal received power RSRP, a signal-to-noise ratio SNR criterion, or reference signal received quality RSRQ.

Optionally, the first beam direction is a receive beam direction corresponding to a received signal with highest RSRP in the plurality of first received signal sets.

Optionally, the first beam direction is a receive beam direction corresponding to a received signal with a highest SNR in the plurality of first received signal sets.

Optionally, the first beam direction is a receive beam direction corresponding to a received signal with highest RSRQ in the plurality of first received signal sets.

Optionally, the first beam direction is a receive beam direction corresponding to a received signal with highest RSRQ, a highest SNR, and highest RSRP in the plurality of first received signal sets.

For example, the first condition may alternatively be a first threshold.

Optionally, the first beam direction is a receive beam direction corresponding to a received signal in the plurality of first received signal sets that satisfies the first threshold.

S320: The UE receives the at least one second broadcast signal based on the target first broadcast signal, to obtain a target second broadcast signal.

First, a method for receiving the at least one second broadcast signal by the UE based on the target first broadcast signal is described.

In a possible implementation, the UE receives the at least one second broadcast signal based on a second beam direction set.

The second beam direction set includes only the first beam direction, or the second beam direction set includes a beam direction determined based on the first beam direction.

For example, the UE receives one or more second broadcast signals based on a receive beam direction of the determined target first broadcast signal, that is, receives the one or more second broadcast signals by using the first beam direction.

For example, the UE determines a plurality of beam directions based on the first beam direction, and receives the one or more second broadcast signals based on the plurality of beam directions.

FIG. 9 is a diagram of a beam used by UE to receive a second broadcast signal according to an embodiment of this application. As shown in FIG. 7, p#0 is the first beam direction, and the plurality of beam directions (the second beam direction set) determined based on the first beam direction may include p#1, p#2, ..., p#7. The beam shown in FIG. 7 is merely an example for description, and constitutes no limitation on embodiments of this application.

The following describes an example of a manner of determining the target second broadcast signal based on the second broadcast signal.

In a possible implementation, the UE determines a second broadcast signal set, where the second broadcast signal set includes a plurality of second broadcast signals to which the target first broadcast signal is mapped; and sweeps a target second broadcast signal set based on the second beam direction set, to obtain the target second broadcast signal.

A beam direction corresponding to the target second broadcast signal is a second beam direction, and the second beam direction is a beam direction in the second beam direction set.

In this application, there is a mapping relationship between the first broadcast signal and the second broadcast signal. For example, one first broadcast signal corresponds to a plurality of second broadcast signals. The plurality of second broadcast signals to which the target first broadcast signal is mapped may form the second broadcast signal set.

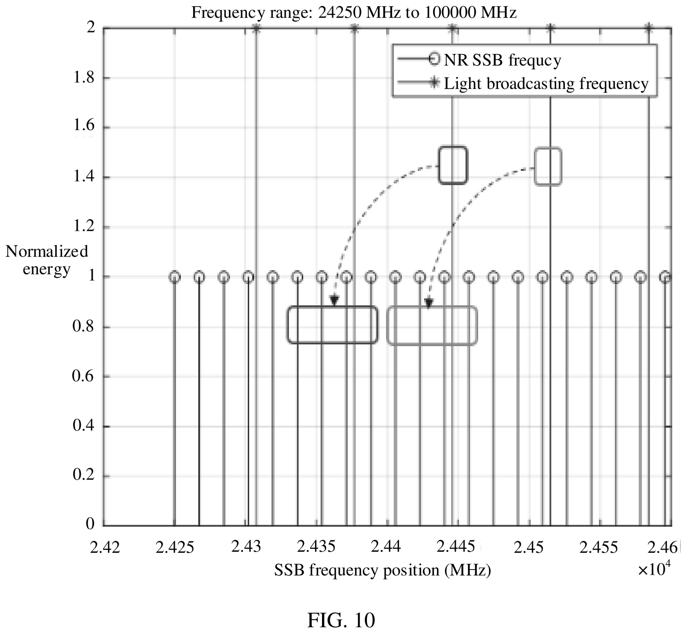

FIG. 10 is a diagram of a mapping relationship between a first broadcast signal and second broadcast signals according to an embodiment of this application. In FIG. 10, a frequency of the first broadcast signal is f=24250.08 MHz+n_first*N*17.28 MHz+fre_offset. In this case, the second broadcast signal set associated with the first broadcast signal is f=24250.08 MHz+{ n_first*N, n_first*N-1, n_first*N-2, ..., n_first*N-n_first+1}*17.28 MHz. An example in which n_first=4 and fre_offset=57.6 MHz is used, and frequency distribution of the first broadcast signal and frequency distribution of the second broadcast signal may be obtained.

The second broadcast signal set may be swept based on the second beam direction set, to obtain the target second broadcast signal.

For example, the second beam direction set may include only the first beam direction. In this case, the UE receives the plurality of second broadcast signals in the second broadcast signal set based on the first beam direction, to obtain one second received signal set, and the UE may select the second beam direction from the second received signal set.

For example, if the second beam direction set includes a plurality of beam directions determined based on the first beam direction, the UE switches the receive beam direction, receives a same second broadcast signal by using a plurality of different receive beam directions, traverses all receive beam directions in the second beam direction set to obtain a plurality of second received signal sets for the same second broadcast signal, and selects the second beam direction from the plurality of second received signal sets.

For a manner in which the UE determines the second beam direction based on the plurality of second received signal sets, refer to the manner in which the UE determines the first beam direction based on the plurality of first received signal sets. Details are not described again.

The following describes a manner in which the UE determines the second broadcast signal set.

In a possible implementation, the UE determines the second broadcast signal set based on a first mapping relationship.

The first mapping relationship is a mapping relationship between the target first broadcast signal and the plurality of second broadcast signals.

In this application, the first mapping relationship may be predefined or preconfigured. This is not limited in embodiments of this application.

In another possible implementation, the UE obtains the second broadcast signal set from the target first broadcast signal.

It may be understood that the target first broadcast signal may carry frequency information of the mapped second broadcast signals, and the UE may determine the second broadcast signal set based on the target first broadcast signal.

For example, the target first broadcast signal may carry first indication information, for example, bit information. The first indication information indicates the second broadcast signal set or the frequency information of the second broadcast signals.

For example, the target first broadcast signal corresponds to a first sequence, and there is a mapping relationship between the first sequence and the second broadcast signal set.

To be specific, the target first broadcast signal corresponds to a sequence, and each sequence corresponds to a set of frequencies of second broadcast signals. The UE detects the sequence in a correlation manner, and obtains the second broadcast signal set based on a mapping relationship between the sequence and the frequencies of the second broadcast signals.

S330: The UE performs access based on the target second broadcast signal.

The UE searches for a satellite based on the second broadcast signal, and accesses a first satellite.

In this application, when the UE is in a connected state, the first satellite sends, to the UE, the first threshold, ephemeris information, first frequency information, and second frequency information of the first satellite, and ephemeris information, first frequency information, and second frequency information of a second satellite.

The first frequency information is frequency information corresponding to the first broadcast signal, and the second frequency information is frequency information corresponding to the second broadcast signal.

The first threshold indicates an ephemeris validity duration in an ephemeris validity duration set of the first satellite and the second satellite.

It should be noted that the ephemeris validity duration defined in embodiments of this application is used by the UE to access a satellite, and is different from a validity duration of assistance information (for example, a common TA and ephemeris information) that is defined in R17 and that is used by UE in a connected state to perform uplink synchronization. The validity duration is an ntn-UlSyncValidityDuration-r17 information element based on RRC signaling, and has 15 discrete values in which a smallest value is 5s and a largest value is 240s. The first threshold defined in this application is mainly used for beam alignment in a satellite capture phase, and required accuracy is far lower than that in an uplink synchronization scenario. Therefore, the ephemeris validity duration may be longer.

The second satellite is a neighboring satellite.

It should be noted that, for UE that does not initially access a network, after the UE is powered on again, actual locations of a serving satellite and a neighboring satellite of the UE change, and locations calculated by the UE based on stored ephemeris information are different from the actual locations. In this case, the UE may determine a search manner based on the first threshold.

The first threshold may be a largest time threshold in the ephemeris validity duration set of the first satellite and the second satellite.

The first threshold is related to ephemeris derivation accuracy and over-the-top time of a satellite.

For example, a low earth orbit/near earth orbit (low earth orbit, LEO) satellite has an orbital altitude of 160 km to 2000 km, and a medium earth orbit (medium earth orbit, MEO) satellite has an orbital altitude of 2000 km to 35768 km. Therefore, an over-the-top time range of the satellite is [83.46s, 2734s]. Uniform quantization is performed for the range, and 16 discrete values, such as { 83, 1901, 3718, 5535, 7353, 9170, 10987, 12804, 14522, 16439, 18256, 20074, 21891, 23708, 25525, 27343 } seconds, are finally obtained as the first threshold.

In this application, the UE may search for a first broadcast signal or a second broadcast signal of the first satellite and a first broadcast signal or a second broadcast signal of the second satellite by using a third beam direction set, or may search for the first broadcast signal or the second broadcast signal of the first satellite and the first broadcast signal or the second broadcast signal of the second satellite by using the first beam direction set.

The third beam direction set is determined based on the second beam direction, the ephemeris information of the first satellite, and the ephemeris information of the second satellite.

The first beam direction set is a receive beam direction set of the UE.

In a possible implementation, when a difference between a power-on moment of the UE and a power-off moment of the UE is less than or equal to the first threshold, the UE may search for the first broadcast signal of the first satellite and the first broadcast signal of the second satellite by using the third beam direction set, the first frequency information of the first satellite, and the first frequency information of the second satellite.

In a possible implementation, when a difference between a power-on moment of the UE and a power-off moment of the UE is less than or equal to the first threshold, the UE may search for the second broadcast signal of the first satellite and the second broadcast signal of the second satellite by using the third beam direction set, the second frequency information of the first satellite, and the second frequency information of the second satellite.

In a possible implementation, when a difference between a power-on moment of the UE and a power-off moment of the UE is less than or equal to the first threshold, the UE may search for the first broadcast signal of the first satellite and the first broadcast signal of the second satellite by using the third beam direction set and full-frequency information.

In a possible implementation, when a difference between a power-on moment of the UE and a power-off moment of the UE is less than or equal to the first threshold, the UE may search for the second broadcast signal of the first satellite and the second broadcast signal of the second satellite by using the third beam direction set and full-frequency information.

In a possible implementation, when a difference between a power-on moment of the UE and a power-off moment of the UE is less than or equal to the first threshold, the UE may search for the first broadcast signal of the first satellite and the first broadcast signal of the second satellite by using the first beam direction set, the first frequency information of the first satellite, and the first frequency information of the second satellite.

In a possible implementation, when a difference between a power-on moment of the UE and a power-off moment of the UE is less than or equal to the first threshold, the UE may search for the second broadcast signal of the first satellite and the second broadcast signal of the second satellite by using the first beam direction set, the second frequency information of the first satellite, and the second frequency information of the second satellite.

It should be understood that, in the NR system, because an access network device does not move, UE first searches for stored frequency information, and this is a most efficient and fastest manner; however, in an NTN network, because an access network device moves at a high speed, it is meaningless to search for stored frequency information after specific time, and a new UE behavior needs to be redefined.

In a possible implementation, when a difference between a power-on moment of the UE and a power-off moment of the UE is greater than the first threshold, the UE may search for the first broadcast signal of the first satellite and the first broadcast signal of the second satellite by using the first beam direction set and full-frequency information based on an initial network access state.

In this application, the access network device may send information such as the first frequency information, the second frequency information, satellite ephemeris information in the entire network, and a maximum sweeping angle of a broadcast beam by using a broadcast message or radio resource control RRC signaling. Correspondingly, the UE may receive the information such as the first frequency information, the second frequency information, the satellite ephemeris information in the entire network, and the maximum sweeping angle of the broadcast beam by using the broadcast message or the radio resource control RRC signaling.

According to the technical solution of this application, the UE may first receive the first broadcast signal before receiving existing broadcast signals (the second broadcast signals). A feature design of the first broadcast signal causes the UE to determine a beam direction of a strongest signal, to capture a satellite more quickly. Further, the second broadcast signals can be quickly found based on the mapping relationship between the first broadcast signal and the second broadcast signals, to improve satellite access efficiency.

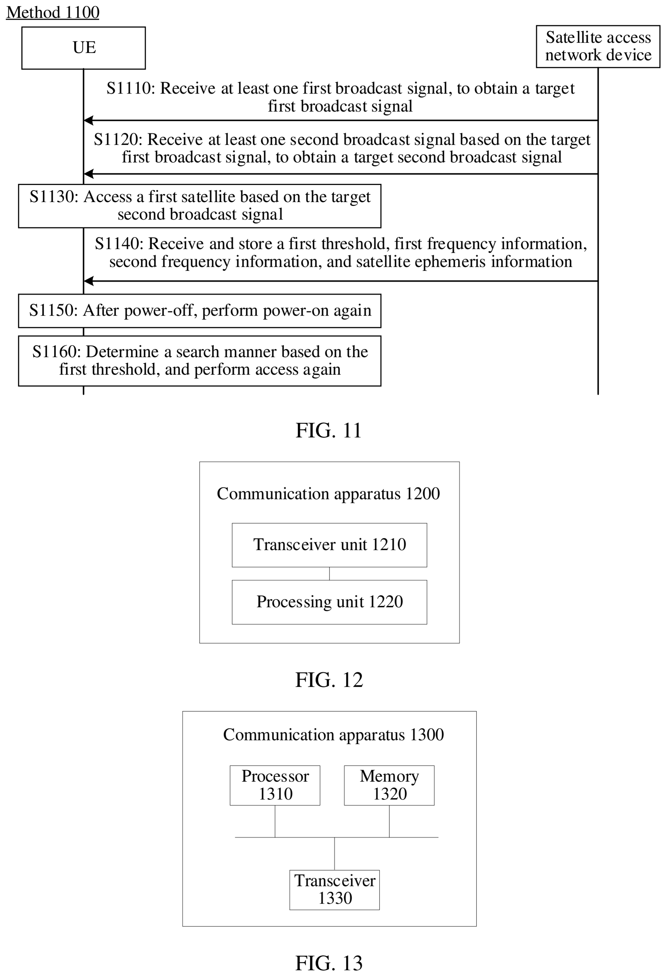

FIG. 11 is a schematic interaction flowchart of accessing a satellite by UE according to an embodiment of this application.

In this method, a manner in which the UE initially accesses the satellite and a manner in which the UE does not initially access the satellite are described, and include the following steps.

S1110: The UE receives at least one first broadcast signal from an access network device, to obtain a target first broadcast signal.

For the first broadcast signal, refer to the descriptions of step S310 in the method 300. Details are not described again.

The UE determines the target first broadcast signal from one or more first broadcast signals.

For example, when receiving the one or more first broadcast signals, the UE continuously switches a receive beam direction, traverses all receive beam directions, and selects a beam direction with a strongest received first broadcast signal, that is, a first beam direction. The target first broadcast signal may be a first broadcast signal with highest received broadcast signal strength, and a receive beam direction of the target first broadcast signal is the first beam direction.

For example, a frequency of the target first broadcast signal is *fₖ*.

S1120: The UE receives at least one second broadcast signal based on the target first broadcast signal, to obtain a target second broadcast signal.

The UE receives the at least one second broadcast signal based on a second beam direction set.

The second beam direction set may include only the first beam direction.

The second beam direction set may be a plurality of beam directions determined based on the first beam direction.

For a method for receiving the one or more second broadcast signals by the UE based on the second beam direction set, refer to step S320 in the method 300. Details are not described again.

The UE receives the at least one second broadcast signal, to obtain the target second broadcast signal.

Specifically, the UE first determines a second broadcast signal set based on a mapping relationship between the first broadcast signal and the second broadcast signal, where the second broadcast signal set includes a plurality of second broadcast signals corresponding to the target first broadcast signal.

For example, the frequency of the target first broadcast signal is *fₖ*, and frequencies of the second broadcast signal set include *f*_{*k,*1}, *f*_{*k*,2},..., *f*_{*k*,}*_{N}.*

For a manner in which the UE determines the second broadcast signal set, refer to step S320 in the method 300. Details are not described again.

The UE sweeps the second broadcast signal set based on the second beam direction set, to obtain the target second broadcast signal.

To be specific, when receiving a second broadcast signal in the second broadcast signal set, the UE continuously switches the receive beam direction, traverses all the receive beam directions in the second beam direction set to obtain a plurality of second received signal sets for the same second broadcast signal, and selects a second beam direction from the plurality of second received signal sets.

For example, the UE performs sweeping by using the second beam direction set, to obtain a frequency *f*_{*k*,*n*} , that is, the target second broadcast signal. A receive beam direction corresponding to the target second broadcast signal is the second beam direction.

S1130: The UE accesses a first satellite based on the target second broadcast signal.

S1140: The first satellite sends, to the UE, a first threshold, ephemeris information, first frequency information, and second frequency information of the first satellite, and ephemeris information, first frequency information, and second frequency information of a second satellite that are before power off.

After receiving the first threshold, the ephemeris information, the first frequency information, and the second frequency information of the first satellite, and the ephemeris information, the first frequency information, and the second frequency information of the second satellite, the UE may store the first threshold and the information.

For the first threshold, the ephemeris information, the first frequency information, and the second frequency information of the first satellite, and the ephemeris information, the first frequency information, and the second frequency information of the second satellite, refer to the descriptions in the method 300. Details are not described again.

After the UE is powered off, the UE may determine, when searching for a satellite again, a search manner based on the first threshold, the ephemeris information, the first frequency information, and the second frequency information of the first satellite, and the ephemeris information, the first frequency information, and the second frequency information of the second satellite that are stored.

S1150: After being powered off, the UE is powered on again.

S1160: The UE determines the search manner based on the first threshold, and accesses the satellite again.

After the UE is powered on again, the UE may search for a first broadcast signal or a second broadcast signal of the first satellite and a first broadcast signal or a second broadcast signal of the second satellite by using a third beam direction set, or may search for the first broadcast signal or the second broadcast signal of the first satellite and the first broadcast signal or the second broadcast signal of the second satellite by using a first beam direction set.

The third beam direction set is determined based on the second beam direction, the ephemeris information of the first satellite, and the ephemeris information of the second satellite.

For a specific determining manner, refer to the descriptions in the method 300. Details are not described again.

In a possible implementation, the UE may estimate, by using an ephemeris derivation module and with reference to a maximum sweeping angle of a broadcast beam of each satellite and a location of the UE, a satellite set C over the UE at power-on time t2 based on the moment t2, stored satellite ephemeris information, and an ephemeris timestamp t1, to obtain estimated locations of satellites and first frequency information of the satellites.

Further, for a satellite k in the set C, the UE may search for a first broadcast signal of the satellite k by using the third beam direction set or the first beam direction set and first frequency information of the satellite.

Similarly, the foregoing search operation is performed on all the satellites in the set C.

If no signal is found, a satellite searching range is expanded level by level based on a derived ephemeris. Different levels of search areas are defined based on a specific criterion, for example, a level-1 search area, a level-2 search area, and a level-3 search area.

The criterion may be a distance between a satellite and the UE. In this case, a distance between a satellite in the level-1 search area and the UE is shorter than a distance between a satellite in the level-2 search area and the UE, and the rest can be deduced by analogy.

According to the foregoing technical solution, the UE that does not perform initial access may adjust a satellite searching behavior based on the stored frequency information of the first broadcast signal, the stored frequency information of the second broadcast signal, and the first threshold delivered by the satellite, to ensure that the UE can determine a search range by using valid satellite ephemeris information. In addition, the UE sweeps satellite areas of different ranges level by level based on the frequency information of the first broadcast signal, to ensure that the UE efficiently captures a satellite.

The first broadcast signal is first received before an existing broadcast signal (the second broadcast signal) is received. A feature design of the first broadcast signal causes the UE to determine a beam direction of a strongest signal, to capture a satellite more quickly. Further, the second broadcast signal can be quickly found based on the mapping relationship between the first broadcast signal and the second broadcast signal, to improve satellite access efficiency.

It should be noted that the solutions provided in the foregoing embodiments may be separately used, or may be used in combination with each other. This is not specifically limited in this application.

The foregoing describes in detail the broadcast beam sweeping method provided in this application. The following describes a communication apparatus provided in this application.

FIG. 12 is a diagram of a structure of a communication apparatus according to an embodiment of this application.

The apparatus 1200 includes a transceiver unit 1210 and a processing unit 1220. The transceiver unit 1210 may be configured to implement a corresponding communication function. The processing unit 1220 may be configured to perform data processing.

Optionally, the transceiver unit 1210 may also be referred to as a communication interface or a communication unit, and includes a sending unit and/or a receiving unit. The transceiver unit 1210 may be a transceiver (including a transmitter and/or a receiver), an input/output interface (including an input interface and/or an output interface), a pin, a circuit, or the like. The transceiver unit 1210 may be configured to perform a sending step and/or a receiving step in the foregoing method embodiments.

Optionally, the processing unit 1220 may be a processor (may include one or more processors), a processing circuit having a processor function, or the like, and may be configured to perform a step other than sending and receiving in the foregoing method embodiments.

Optionally, the apparatus 1200 further includes a storage unit. The storage unit may be a memory, an internal storage unit (for example, a register or a cache), an external storage unit (for example, a read-only memory or a random access memory), or the like. The storage unit is configured to store instructions. The processing unit 1220 executes the instructions stored in the storage unit, to enable the communication apparatus to perform the foregoing method.

In a design, the apparatus 1200 may be configured to perform an action performed by the UE in the foregoing method embodiments. For example, the apparatus 1200 may be configured to perform an action performed by the UE in the foregoing method 300 or 1100. In this case, the apparatus 1200 may be a component of the UE. The transceiver unit 1210 is configured to perform a receiving/sending-related operation on a UE side in the foregoing method embodiments. The processing unit 1220 is configured to perform a processing-related operation of the UE in the foregoing method embodiments.

For example, the transceiver unit 1210 is configured to receive at least one first broadcast signal based on a first periodicity or continuously receive the at least one first broadcast signal, to obtain a target first broadcast signal, where the first periodicity is less than a minimum sending periodicity of a second broadcast signal. The transceiver unit 1210 is further configured to receive at least one second broadcast signal based on the target first broadcast signal, to obtain a target second broadcast signal. The processing unit 1220 is configured to perform access based on the target second broadcast signal.

It should be understood that the transceiver unit 1210 and the processing unit 1220 may further perform other operations performed by the UE in any one of the foregoing method 300 or 1100. Details are not described herein again.

In a design, the apparatus 1200 may be configured to perform an action performed by the access network device in the foregoing method embodiments. For example, the apparatus 1200 may be configured to perform an action performed by the access network device in the foregoing method 300 or 1100. In this case, the apparatus 1200 may be a component of the access network device. The transceiver unit 1210 is configured to perform a receiving/sending-related operation on an access network device side in the foregoing method embodiments. The processing unit 1220 is configured to perform a processing-related operation of the access network device in the foregoing method embodiments.

For example, the transceiver unit 1210 is configured to send at least one first broadcast signal based on a first periodicity or continuously send the at least one first broadcast signal, where the at least one first broadcast signal is used by a terminal device UE to determine a target first broadcast signal, the target first broadcast signal is used by the UE to receive at least one second broadcast signal, and the first periodicity is less than a minimum sending periodicity of the second broadcast signal. The transceiver unit 1210 is further configured to send the at least one second broadcast signal, where the at least one second broadcast signal is used by the UE to determine a target second broadcast signal, and the target second broadcast signal is used by the UE to access a first satellite.

It should be understood that the transceiver unit 1210 and the processing unit 1220 may further perform other operations performed by the access network device in any one of the foregoing method 300 or 1100. Details are not described herein again.

It should be further understood that the apparatus 1200 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described functions. In an optional example, a person skilled in the art may understand that the apparatus 1200 may be specifically the network device in the foregoing embodiments, and may be configured to perform procedures and/or steps corresponding to the network device in the foregoing method embodiments. To avoid repetition, details are not described herein again.

The apparatus 1200 in each of the foregoing solutions has a function of implementing corresponding steps performed by the terminal device in the foregoing methods, or the apparatus 1200 in each of the foregoing solutions has a function of implementing corresponding steps performed by the network device in the foregoing methods. The function may be implemented by hardware, or may be implemented by hardware executing corresponding software. The hardware or software includes one or more modules corresponding to the foregoing function. For example, the transceiver unit may be replaced with a transceiver machine (for example, the sending unit in the transceiver unit may be replaced with a transmitter machine, and the receiving unit in the transceiver unit may be replaced with a receiver machine), and another unit, for example, the processing unit, may be replaced with a processor, to separately perform sending and receiving operations and a related processing operation in the method embodiments.

In addition, the transceiver unit 1210 may alternatively be a transceiver circuit (for example, may include a receiver circuit and a transmitter circuit), and the processing unit may be a processing circuit.

It should be noted that the apparatus in FIG. 12 may be the network element or the device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

FIG. 13 is a diagram of a communication architecture according to an embodiment of this application. The communication apparatus 1300 shown in FIG. 13 includes a processor 1310, a memory 1320, and a transceiver 1330. The processor 1310 is coupled to the memory 1320, and is configured to execute instructions stored in the memory 1320, to control the transceiver 1330 to send a signal and/or receive a signal.

It should be understood that the processor 1310 and the memory 1320 may be combined into one processing apparatus, and the processor 1310 is configured to execute program code stored in the memory 1320 to implement the foregoing function. During specific implementation, the memory 1320 may be integrated into the processor 1310, or may be independent of the processor 1310. It should be understood that the processor 1310 may alternatively correspond to each processing unit in the foregoing communication apparatus, and the transceiver 1330 may correspond to each receiving unit and sending unit in the foregoing communication apparatus.

It should be further understood that the transceiver 1330 may include a receiver (or referred to as a receiver machine) and a transmitter (or referred to as a transmitter machine). The transceiver may further include an antenna, and there may be one or more antennas. The transceiver may alternatively be a communication interface or an interface circuit.

Specifically, the communication apparatus 1300 may correspond to the terminal device in the method 1100 or the method 1500 according to embodiments of this application. The communication apparatus 1300 may include a unit in the method performed by the terminal device in the method 300 or the method 1100. It should be understood that a specific process in which the units perform the foregoing corresponding steps is described in detail in the foregoing method embodiments, and for brevity, details are not described herein.

When the communication apparatus 1300 is a chip, the chip includes an interface unit and a processing unit. The interface unit may be an input/output circuit or a communication interface. The processing unit may be a processor, a microprocessor, or an integrated circuit integrated on the chip.

In an implementation process, the steps in the foregoing methods may be implemented by using a hardware integrated logic circuit in the processor, or by using instructions in a form of software. The steps in the methods disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, the steps in the foregoing method embodiments may be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by software, hardware, firmware, or any combination thereof. When software is used to implement the foregoing embodiments, all or a part of the foregoing embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In embodiments of this application, the terms such as "example" or "for example" are used for representing giving an example, an illustration, or a description. Any embodiment or design solution described as an "example" in this application should not be explained as being more preferred or having more advantages than another embodiment or design solution. Exactly, use of the term example is intended to present a concept in a specific manner.

It should be understood that an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that the UE or the base station performs corresponding processing in an objective situation, are not intended to limit time, do not require the UE or the base station to necessarily perform a determining action during implementation, and do not mean another limitation.

In addition, the terms "system" and "network" may be used interchangeably in this specification. The term "and/or" in this specification describes only an association relationship between associated objects and represents that three relationships may exist. For example, A and/or B may represent the following three cases: Only A exists, both A and B exist, and only B exists.

The term "at least one of..." in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" means one or more. "A plurality of" means two or more.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "have", and their variants all mean "include but are not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or a part of the steps in the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A non-terrestrial network NTN access method, applied to a terminal device UE, and comprising:
receiving at least one first broadcast signal based on a first periodicity or continuously receiving the at least one first broadcast signal, to obtain a target first broadcast signal, wherein the first periodicity is less than a minimum sending periodicity of a second broadcast signal;
receiving at least one second broadcast signal based on the target first broadcast signal, to obtain a target second broadcast signal; and
performing access based on the target second broadcast signal.

2. The method according to claim 1, wherein a beam width of the at least one first broadcast signal is greater than or equal to a beam width of the at least one second broadcast signal.

3. The method according to claim 1 or 2, wherein there is no intersection of a spectrum set to which the at least one first broadcast signal belongs and a spectrum set to which the at least one second broadcast signal belongs.

4. The method according to any one of claims 1 to 3, wherein a frequency raster of the at least one first broadcast signal is sparser than a frequency raster of the at least one second broadcast signal.

5. The method according to any one of claims 1 to 4, wherein obtaining the target first broadcast signal comprises:
determining a first beam direction based on a receive beam direction of the at least one first broadcast signal, wherein the first beam direction is a beam direction of receiving the target first broadcast signal.

6. The method according to claim 5, wherein determining the first beam direction based on the receive beam of the at least one first broadcast signal comprises:
receiving the at least one first broadcast signal based on a first beam direction set, to obtain a plurality of first received signal sets, wherein the first beam direction set is a receive beam direction set of the UE; and
determining the first beam direction based on the plurality of first received signal sets.

7. The method according to claim 6, wherein determining the first beam direction based on the plurality of first received signal sets comprises:
determining the first beam direction from the plurality of first received signal sets based on reference signal received power RSRP, a signal-to-noise ratio SNR criterion, or reference signal received quality RSRQ.

8. The method according to claim 7, wherein
the first beam direction is a receive beam direction corresponding to a received signal with highest RSRP in the plurality of first received signal sets; or
the first beam direction is a receive beam direction corresponding to a received signal with a highest SNR in the plurality of first received signal sets; or
the first beam direction is a receive beam direction corresponding to a received signal with highest RSRQ in the plurality of first received signal sets.

9. The method according to any one of claims 1 to 8, wherein receiving the at least one second broadcast signal based on the target first broadcast signal comprises:
receiving the at least one second broadcast signal based on a second beam direction set, wherein the second beam direction set comprises only the first beam direction, or the second beam direction set comprises a beam direction determined based on the first beam direction.

10. The method according to any one of claims 1 to 9, wherein obtaining the target second broadcast signal comprises:
determining a second broadcast signal set, wherein the second broadcast signal set comprises a plurality of second broadcast signals to which the target first broadcast signal is mapped; and
sweeping the target second broadcast signal set based on the second beam direction set, to obtain the target second broadcast signal, wherein a beam direction corresponding to the target second broadcast signal is a second beam direction, and the second beam direction is a beam direction in the second beam direction set.

11. The method according to claim 10, wherein determining the second broadcast signal set comprises:
determining the second broadcast signal set based on a first mapping relationship, wherein the first mapping relationship is a mapping relationship between the target first broadcast signal and the plurality of second broadcast signals; or
obtaining the second broadcast signal set from the target first broadcast signal.

12. The method according to claim 11, wherein obtaining the second broadcast signal set from the target first broadcast signal comprises:
determining the second broadcast signal set based on first indication information carried in the target first broadcast signal; or
determining a first sequence corresponding to the target first broadcast signal, and determining the second broadcast signal set based on a correspondence between the first sequence and the second broadcast signal set.

13. The method according to any one of claims 1 to 12, wherein when the UE is UE that does not initially access a network, the method further comprises:
receiving a first threshold, wherein the first threshold indicates an ephemeris validity duration in an ephemeris validity duration set of the first satellite and a second satellite, the first satellite is a serving satellite of the UE, and the second satellite is a neighboring satellite; and
when a difference between a power-on moment of the UE and a power-off moment of the UE is less than or equal to the first threshold, searching for, by the UE, the first broadcast signal of the first satellite and the first broadcast signal of the second satellite based on a third beam direction set, first frequency information of the first satellite, and first frequency information of the second satellite, wherein the third beam direction set is determined based on the second beam direction, ephemeris information of the first satellite, and ephemeris information of the second satellite, and the first frequency information is frequency information that corresponds to the first broadcast signal and that is stored by the UE; or searching for, by the UE, the second broadcast signal of the first satellite and the second broadcast signal of the second satellite based on the third beam direction set, second frequency information of the first satellite, and second frequency information of the second satellite, wherein the second frequency information is frequency information that corresponds to the second broadcast signal and that is stored by the UE.

14. The method according to claim 13, wherein the method further comprises:
receiving the first frequency information, the second frequency information, the first threshold, satellite ephemeris information in the entire network, and a maximum sweeping angle of a broadcast beam by using a broadcast message or radio resource control signaling.

15. The method according to any one of claims 1 to 14, wherein the first broadcast signal is a monophonic signal or a narrowband signal.

16. The method according to any one of claims 1 to 15, wherein
if a frequency of the second broadcast signal is f=a+b, a frequency of the first broadcast signal can be f=a*n_first+b+fre_offset, wherein n_first represents a multiple of sparseness, fre_offset represents a frequency offset X MHz, and a and b represent frequency values.

17. A non-terrestrial network NTN access method, applied to an access network device and comprising:
sending at least one first broadcast signal based on a first periodicity or continuously sending the at least one first broadcast signal, wherein the at least one first broadcast signal is used by a terminal device UE to determine a target first broadcast signal, the target first broadcast signal is used by the UE to receive at least one second broadcast signal, and the first periodicity is less than a minimum sending periodicity of the second broadcast signal; and
sending the at least one second broadcast signal, wherein the at least one second broadcast signal is used by the UE to determine a target second broadcast signal, and the target second broadcast signal is used by the UE to access a first satellite.

18. The method according to claim 16, wherein a beam width of the at least one first broadcast signal is greater than or equal to a beam width of the at least one second broadcast signal.

19. The method according to claim 17 or 18, wherein there is no intersection of a spectrum set to which the at least one first broadcast signal belongs and a spectrum set to which the at least one second broadcast signal belongs.

20. The method according to any one of claims 17 to 19, wherein a frequency raster of the at least one first broadcast signal is sparser than a frequency raster of the at least one second broadcast signal.

21. The method according to any one of claims 17 to 20, wherein when the UE is UE that does not initially access a network, the method further comprises:
sending a first threshold, wherein the first threshold indicates an ephemeris validity duration in an ephemeris validity duration set of the first satellite and a second satellite, the first satellite is a serving satellite of the UE, and the second satellite is a neighboring satellite.

22. The method according to claim 21, wherein the method further comprises:
sending first frequency information, second frequency information, the first threshold, satellite ephemeris information in the entire network, and a maximum sweeping angle of a broadcast beam by using a broadcast message or radio resource control signaling, wherein the first frequency information is frequency information that corresponds to the first broadcast signal and that is stored by the UE, and the second frequency information is frequency information that corresponds to the second broadcast signal and that is stored by the UE.

23. The method according to any one of claims 17 to 22, wherein the first broadcast signal is a monophonic signal or a narrowband signal.

24. The method according to any one of claims 17 to 23, wherein
if a frequency of the second broadcast signal is f=a+b, a frequency of the first broadcast signal can be f=a*n_first+b+fre_offset, wherein n_first represents a multiple of sparseness, fre_offset represents a frequency offset X MHz, and a and b represent frequency values.

25. A communication apparatus, wherein the communication apparatus is configured to perform the method according to any one of claims 1 to 16 or claims 17 to 24.

26. A communication apparatus, wherein the communication apparatus comprises at least one processor and at least one memory, the at least one memory is configured to store a computer program or instructions, and the at least one processor is configured to execute the computer program or the instructions in the memory, to perform the method according to any one of claims 1 to 16 or the method according to any one of claims 17 to 24.

27. A computer-readable storage medium, wherein the computer-readable storage medium stores computer instructions; and when the computer instructions are run on a computer, the method according to any one of claims 1 to 16 is performed, or the method according to any one of claims 17 to 24 is performed.

28. A computer program product, wherein the computer program product comprises computer program code; and when the computer program code is run on a computer, the method according to any one of claims 1 to 16 is performed, or the method according to any one of claims 17 to 24 is performed.
